# EUROPEAN PATENT APPLICATION

(11) **EP 4 167 015 A1**
(43) Date of publication of application: **19.04.2023**
(21) Application number: 21822790.8
(22) Date of filing: 02.06.2021
(51) Int. Cl.: G02B 26/08, G02B 7/00, G02B 7/02, G02B 7/04, G02B 7/18, G03B 17/02, H04N 5/225

(54) **ADJUSTMENT MECHANISM AND IMAGING DEVICE**

(30) Priority: 12.06.2020 JP 2020102624
(71) Applicant: Kyocera Corporation, Kyoto-shi Kyoto 612-8501 (JP)
(72) Inventor: YASUDA Toshiyuki, Kyoto-shi, Kyoto 612-8501 (JP)
(74) Representative: Viering, Jentschura & Partner mbB Patent- und Rechtsanwälte
(86) International application number: PCT/JP2021/021100
(87) International publication number: WO 2021/251245

(57) **Abstract**

Alight direction adjustment mechanism and an imaging device that enables size reduction are provided. The adjustment mechanism includes a first optical element (201), a second optical element (202) having a same optical axis as that of the first optical element (201), and a rotation mechanism (63). The rotation mechanism (63) allows the first optical element (201) to rotate while the rotation mechanism (63) changes a rotation angle of the first optical element (201) relative to the second optical element (202) when the first optical element (201) is rotated about the optical axis in a first direction. The rotation mechanism (63) allows the first optical element (201) to rotate while the rotation mechanism (63) does not change the rotation angle of the first optical element (201) relative to the second optical element (202) when the first optical element (201) is rotated about the optical axis in a second direction.

## Description

### CROSS-REFERENCE TO RELATED APPLICATIONS

This application claims the benefit of Japanese Patent Application No. 2020-102624 filed June 12, 2020, which is hereby incorporated by reference herein in its entirety.

### TECHNICAL FIELD

The present disclosure relates to an adjustment mechanism and an imaging device.

### BACKGROUND OF INVENTION

In recent years, imaging devices have been expected to have an increasingly high density of pixels. In this trend, reduction of the pixel-to-pixel spacing decreases the dimensional tolerance of components. For example, in the process of assembling an imaging device, an adhesive is used to fix the substrate on which an image sensor is mounted, and the contraction of the adhesive during setting may displace the image sensor. In this case, an adjustment mechanism configured to adjust the direction of light can be used to compensate such displacement of the image sensor.

For example, Patent Literature 1 discloses a mechanism configured to change a positional relationship between two prisms and thereby adjust the direction of light.

### CITATION LIST

### PATENT LITERATURE

Patent Literature 1: Japanese Unexamined Patent Application Publication No. 2002-174785

### SUMMARY

According to an embodiment of the present disclosure, an adjustment mechanism includes a first optical element, a second optical element having a same optical axis as that of the first optical element, and a rotation mechanism. The rotation mechanism allows the first optical element to rotate while the rotation mechanism changes a rotation angle of the first optical element relative to the second optical element when the first optical element is rotated about the optical axis in a first direction. The rotation mechanism allows the first optical element to rotate while the rotation mechanism does not change the rotation angle of the first optical element relative to the second optical element when the first optical element is rotated about the optical axis in a second direction.

According to an embodiment of the present disclosure, an imaging device includes a first optical element, a second optical element having a same optical axis as that of the first optical element, a rotation mechanism, and an image sensor. The rotation mechanism allows the first optical element to rotate while the rotation mechanism changes a rotation angle of the first optical element relative to the second optical element when the first optical element is rotated about the optical axis in a first direction. The rotation mechanism allows the first optical element to rotate while the rotation mechanism does not change the rotation angle of the first optical element relative to the second optical element when the first optical element is rotated about the optical axis in a second direction. The image sensor has a light receiving surface disposed at a position where light passing through the first optical element and the second optical element forms an image.

### BRIEF DESCRIPTION OF THE DRAWINGS

FIG. 1 is a view illustrating an exterior of an imaging device according to an embodiment of the present disclosure.
FIG. 2 is a cross-sectional view illustrating major elements of the imaging device.
FIG. 3 is a view for explanation of a relationship between a first holder and a second holder when the first holder is rotated in a first direction.
FIG. 4 is a view illustrating an example of a positional relationship between a first optical element and a second optical element as well as the direction of incident light.
FIG. 5 is a view illustrating an example of a positional relationship between the first optical element and the second optical element as well as the direction of incident light.
FIG. 6 is a view for explanation of a relationship between the first holder and the second holder after rotation in a second direction.
FIG. 7 is a view for explanation of a relationship between an image sensor and the direction of incident light.

### DESCRIPTION OF EMBODIMENTS

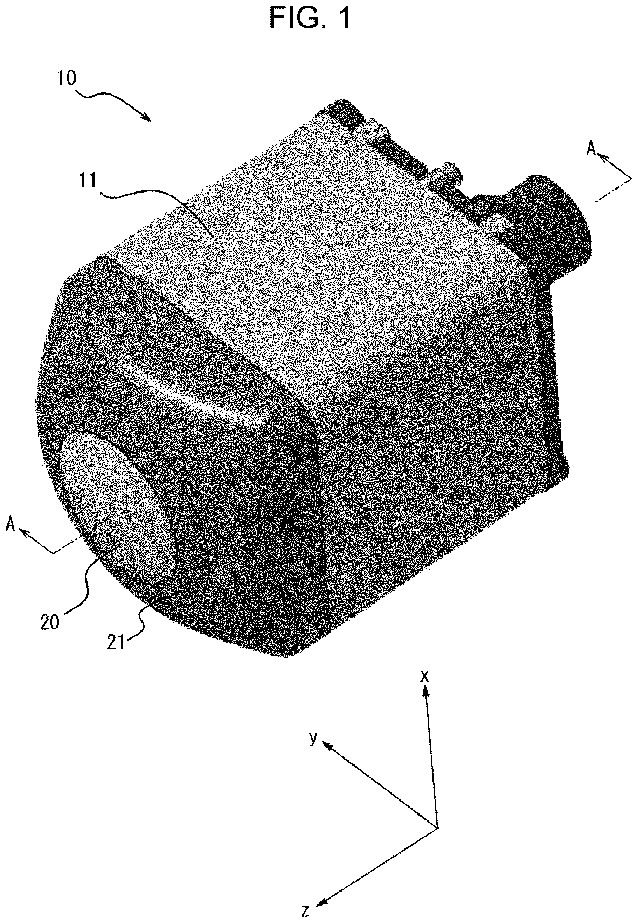

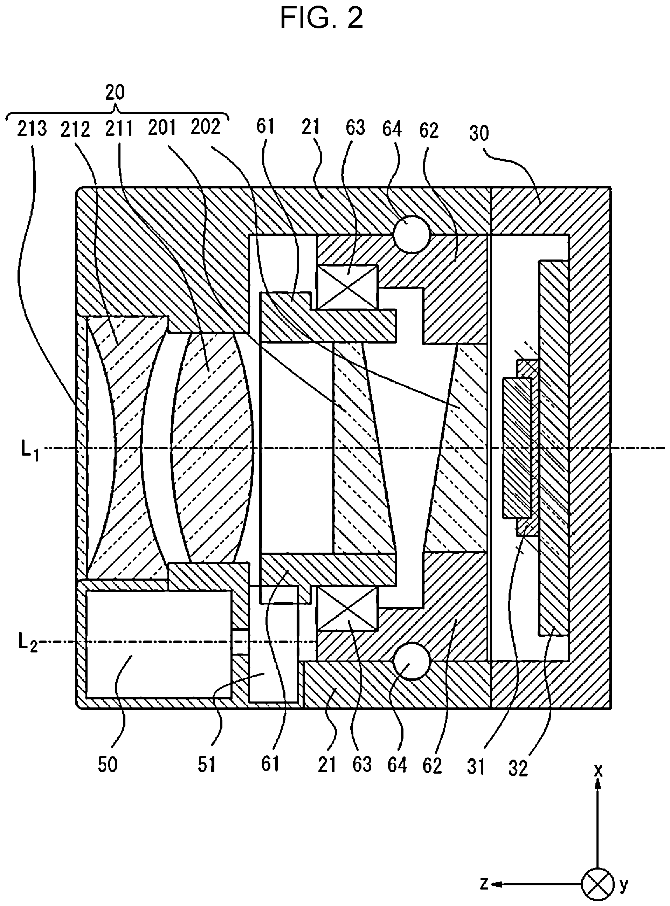

FIG. 1 is a view illustrating an exterior of an imaging device 10 according to an embodiment of the present disclosure. FIG. 2 is a cross-sectional view illustrating major elements of the imaging device 10 except for a housing 11. FIG. 2 is a cross section of the imaging device 10 taken along line A-A in FIG. 1, which illustrates major elements accommodated in the housing 11. The imaging device 10 includes a light direction adjustment mechanism, which is described later.

As illustrated in FIGs. 1 and 2, the orthogonal coordinate system is defined with respect to the orientation of the imaging device 10. The z-axis direction is a direction parallel to an optical axis L₁ of the imaging device 10. The imaging device 10 capture an image of an object that is present at the positive z side in the z-axis direction from the imaging device 10. The positive z side in the z-axis direction may be referred to as the "object side" or "front side". The negative z side in the z-axis direction may be referred to as the "image forming side" or "rear side". The y-axis direction corresponds to the width direction of the imaging device 10. The x-axis direction corresponds to the height direction of the imaging device 10. In the following description, positional relationships may be described using axes and plains related to this orthogonal coordinate system.

As illustrated in FIG. 1, the imaging device 10 is covered by the housing 11. As illustrated in FIG. 2, the imaging device 10 includes an imaging optical system 20, a lens barrel 21, an inner frame 30, an image sensor 31, a substrate 32, a drive unit 50, a transmission member 51, a first holder 61, a second holder 62, a rotation mechanism 63, and a ball bearing 64. Accordingly, the imaging device 10 has a structure in which the elements illustrated in FIG. 2 are covered by the housing 11 illustrated in FIG. 1. The elements included in the imaging device 10 is described later in detail. Note that FIGs. 1 and 2 are provided as example illustrations. The imaging device 10 need not include all of the elements illustrated in FIGs. 1 and 2. The imaging device 10 may include elements other than the elements illustrated in FIGs. 1 and 2.

The housing 11 protects the components inside from external shocks or the like. Although the housing 11 is formed of three components in the present embodiment, the housing 11 may be formed of one, two, or four or more components. In the case of the housing 11 being formed of multiple components, these components are joined to each other, for example, by an adhesive, or may be joined by welding, fitting, or using screws or the like.

For example, the material of housing 11 is a resin but is not limited thereto. Examples of the resin as the material of the housing 11 may be polyphenylene sulfide (PPS), polyether-imide (PEI), polyether ether ketone (PEEK), polycarbonate (PC), cycloolefin polymer (COP), ABS resin, polyethylene terephthalate (PET), and polystyrene (PS), but are not limited to these. Alternatively, at least one of the components of the housing 11 may be made of a metal, which improves the heat radiation. Examples of the metal as the material of the housing 11 may be aluminum, copper, nickel, a copper-nickel-zinc alloy, a magnesium alloy, or a zinc alloy, but are not limited to these.

The housing 11 has a first opening that does not block incident light entering the imaging optical system 20. The first opening is formed in a front part of the housing 11 and exposes part of the imaging optical system 20 and part of the lens barrel 21. For example, the housing 11 may be joined to the lens barrel 21 in such a manner that the first opening of the housing 11 engages part of the lens barrel 21. Alternatively, the housing 11 may be joined to the lens barrel 21 by using an adhesive, welding or the like. The housing 11 presses the imaging optical system 20 rearward and thereby prevents the imaging optical system 20 from coming out through the first opening.

The housing 11 has a second opening for wiring. The wiring includes, for example, a power line to supply power to the imaging device 10, a signal line to output an image signal from the image sensor 31, and a control signal line to receive a drive signal for driving the drive unit 50. The wiring lines may be extended out of the imaging device 10 through the second opening formed at a rear part of the housing 11 and connected to an electronic device outside the imaging device 10.

The imaging optical system 20 includes optical members and is designed so as to satisfy desired optical characteristics including focal length and focal depth. In the present embodiment, the imaging optical system 20 includes such optical members as a first optical element 201, a second optical element 202, a first lens 211, a second lens 212, and a protective cover 213. The first optical element 201 and the second optical element 202 are prisms each of which has two non-parallel surfaces and is disposed such that the two non-parallel surfaces intersect the optical axis L₁. The same optical axis L₁ passes through the first optical element 201 and the second optical element 202. In the present embodiment, the first optical element 201 has the same shape as that of the second optical element 202. The first optical element 201, however, may have a shape different from that of the second optical element 202. The first lens 211 is a convex lens in the present embodiment, but the first lens 211 may be a lens of a different type. The second lens 212 is a concave lens in the present embodiment, but the second lens 212 may be a lens of a different type. The protective cover 213 is a transparent cover that does not block incident light entering the imaging optical system 20. The protective cover 213 protects the optical members disposed therebehind from foreign matter, such as dust.

For example, the material of the first optical element 201, the second optical element 202, the first lens 211, the second lens 212, and the protective cover 213 is a resin but is not limited thereto. For example, at least one of the components may be made of a material different from the resin. For example, the first optical element 201 and the second optical element 202 may be glass prisms. Alternatively, for example, the first lens 211 and the second lens 212 may be glass lenses. The imaging optical system 20 may further include, for example, an aperture and an optical filter. The number of the optical members included in the imaging optical system 20 may be one or more and four or less, or may be six and more. The protective cover 213 may have a filter function to select the wavelength of incident light.

The lens barrel 21 is an optical member included in the imaging optical system 20 and serves at least to hold lenses. The lens barrel 21 is shaped like a tube that surrounds the optical axis L₁ of the imaging optical system 20. The lens barrel 21 may have a protruding portion protruding toward the positive z side in the z-axis direction from the end of the lens barrel 21 that faces an object to be imaged, and the protruding portion may be joined to the housing 11. In the present embodiment, the lens barrel 21 directly holds the first lens 211, the second lens 212, and the protective cover 213. For example, the material of the lens barrel 21 is a resin but is not limited thereto. Examples of the resin to be used as the material of the lens barrel 21 are the resins listed in the above description of the housing 11 but are not limited thereto. The resin used as the material of the lens barrel 21 is preferably a material having a low moisture absorbency. An alternative example of the material of the lens barrel 21 may be a metal, such as an aluminum alloy, a magnesium alloy, or a zinc alloy.

The image sensor 31 is disposed at the image forming side of the imaging optical system 20 so as to receive light through the imaging optical system 20 to form an image of the object on the image sensor 31. In other words, the light receiving surface of the image sensor 31 is disposed at a position where light passing through the first optical element 201 and the second optical element 202 forms an image. The image sensor 31 captures the image of the object formed on the light receiving surface, converts the image to an image signal, and outputs the image signal. For example, the image sensor 31 may be a CCD (charge coupled device) image sensor or a CMOS (complementary metal oxide semiconductor) image sensor.

The substrate 32 is a circuit substrate on which electronic components including at least the image sensor 31 are mounted. The image sensor 31 is mounted on the front surface of the substrate 32. In other words, the image sensor 31 is mounted on the substrate 32 in such a manner that the light receiving surface of the image sensor 31 can receive the image of the object formed through the imaging optical system 20. The substrate 32 is fixed to the inner frame 30 using an adhesive.

The inner frame 30 is attached to the lens barrel 21. In the present embodiment, an adhesive is used to join the inner frame 30 to the lens barrel 21, but the method of joining is not limited to the adhesive. Alternatively, the inner frame 30 may be joined to the lens barrel 21 using screws. For example, the material of the inner frame 30 is a resin but is not limited thereto. Examples of the resin to be used as the material of the inner frame 30 are the resins listed in the above description of the housing 11 but are not limited thereto. The resin used as the material of the inner frame 30 is preferably a material having a low moisture absorbency. An alternative example of the material of the inner frame 30 may be a metal, such as an aluminum alloy, a magnesium alloy, or a zinc alloy.

The drive unit 50 is a device that generates and transmits power to move the first optical element 201 and others. In the present embodiment, the drive unit 50 is a motor that rotates a shaft about a rotation axis L₂.

The transmission member 51 is attached to the drive unit 50 and transmits the power of the drive unit 50 to the first optical element 201. In the present embodiment, the transmission member 51 is a gear attached to the shaft of the drive unit 50.

The first holder 61 is a tubular member that holds the first optical element 201. The power of the drive unit 50 is transmitted via the transmission member 51 to the first holder 61, thereby rotating the first holder 61 about the optical axis L₁ in a first direction or in a second direction. The rotation of the first holder 61 rotates the first optical element 201 held by the first holder 61. Here, the first direction is, for example, the clockwise direction. The second direction is, for example, the counterclockwise direction. For example, the material of the first holder 61 is a resin but is not limited thereto. Examples of the resin to be used as the material of the first holder 61 are the resins listed in the above description of the housing 11 but are not limited thereto.

The second holder 62 is a tubular member that holds the second optical element 202. In the present embodiment, the second holder 62 accommodates at least part of the first holder 61. The second holder 62 is rotatably accommodated inside the lens barrel 21 with a ball bearing 64 interposed therebetween. The second holder 62 can rotate about the optical axis L₁ with respect to the lens barrel 21 in the first direction or in the second direction. In other words, the second holder 62 is disposed in the lens barrel 21 so as to be able to rotate with respect to the lens barrel 21 about the optical axis L₁ of the second optical element 202. For example, the material of the second holder 62 is a resin but is not limited thereto. Examples of the resin to be used as the material of the second holder 62 are the resins listed in the above description of the housing 11 but are not limited thereto.

The ball bearing 64 is an antifriction bearing using balls. The ball bearing 64 is disposed between the tubular second holder 62 and the tubular lens barrel 21 and disposed so as to surround the optical axis L₁. For example, the material of the balls of the ball bearing 64 is a high-carbon and high-chrome steel but is not limited thereto.

The rotation mechanism 63 is disposed between the first holder 61 and the second holder 62. The rotation mechanism 63 is a device to transmit the movement of the first holder 61 to the second holder 62 depending on the direction of rotation. In the present embodiment, the rotation mechanism 63 is a one-way clutch. The rotation mechanism 63 allows the first optical element 201 and the second optical element 202 to rotate via the first holder 61 and the second holder 62.

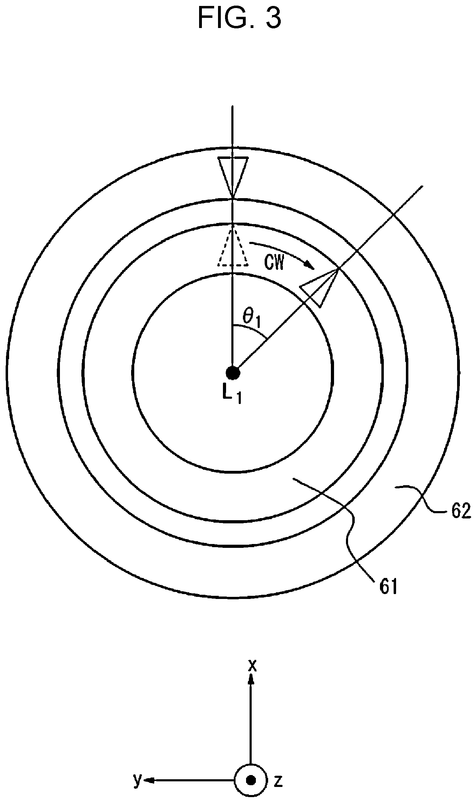

FIG. 3 is a view for explanation of the relationship between the first holder 61 and the second holder 62 when the first holder 61 is rotated in the first direction. In the example illustrated in FIG. 3, the power of the drive unit 50 is transmitted to the first holder 61 via the transmission member 51 so as to rotate the first holder 61 in the first direction or clockwise (CW). When the first holder 61 holding the first optical element 201 is rotated about the optical axis L₁ in the first direction, the rotation mechanism 63 changes the rotation angle θ₁ of the first holder 61 with respect to the second holder 62 holding the second optical element 202.

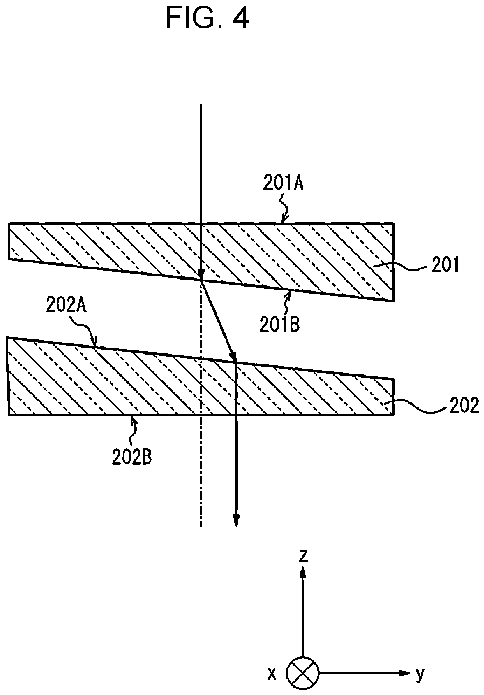

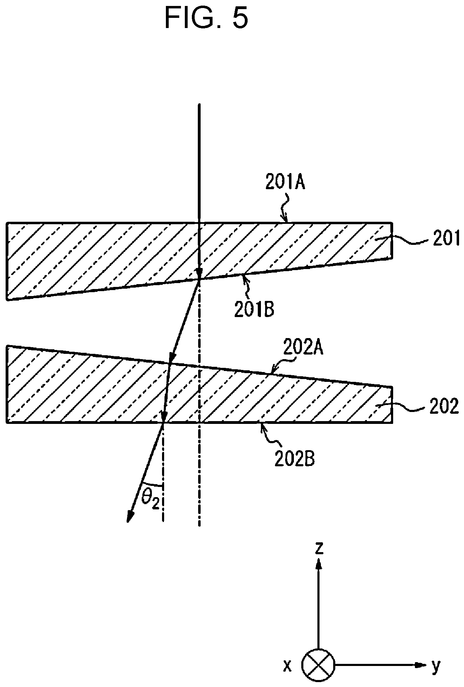

FIGs. 4 and 5 are examples that illustrate a positional relationship between the first optical element 201 and the second optical element 202 as well as the direction of incident light when the first holder 61 is rotated by the rotation angle θ₁ with respect to the second holder 62. In the example illustrated in FIG. 4, light being incident on a first surface 201A of the first optical element 201 exits the first optical element 201 in a direction inclined from the z-axis direction from a second surface 201B that is not parallel to the first surface 201A. Subsequently, the light is incident on a first surface 202A of the second optical element 202 that is parallel to the second surface 201B of the first optical element 201, and the light proceeds in a direction parallel to the z-axis direction and exits the second optical element 202 from a second surface 202B that is not parallel to the first surface 202A. Here, the rotation mechanism 63 has allowed the first holder 61 to rotate in the first direction. The rotation affects the positional relationship between the first optical element 201 and the second optical element 202 and changes the angle of the light emitted. For example, as illustrated in FIG. 5, the light that is incident on the first surface 201A of the first optical element 201 in a direction parallel to the z-axis direction exits the second optical element 202 from the second surface 202B at an angle of θ₂ with respect to the z-axis direction. Consequently, when the rotation mechanism 63 allows the first optical element 201 to rotate in the first direction by the rotation angle θ₁ with respect to the second optical element 202, the light can be emitted from the second optical element 202 at the angle θ₂ with respect to the z-axis direction. Here, the relationship between the rotation angle θ₁ and the angle θ₂ can be set through optical designing of the shapes, relative positions, etc., of the first optical element 201 and the second optical element 202.

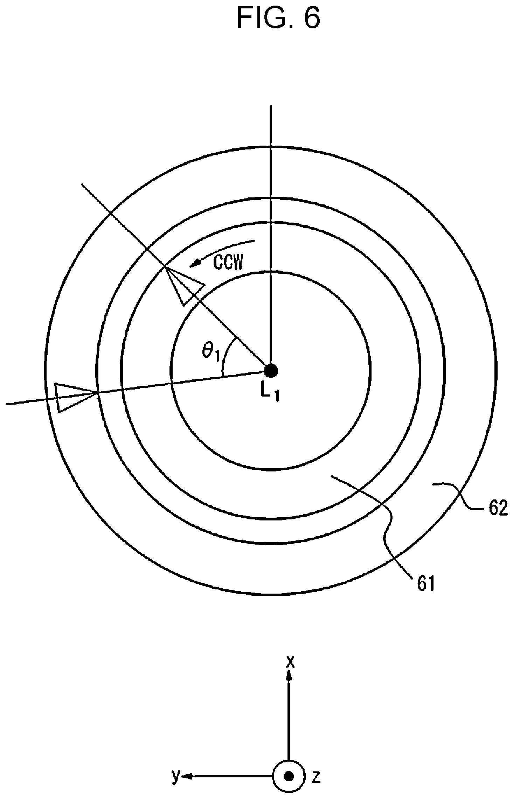

FIG. 6 is a view for explanation of the relationship between the first holder 61 and the second holder 62 after rotation in the second direction. In the example of FIG. 6, the first holder 61, which has been rotated in the first direction by the rotation angle θ₁ with respect to the second holder 62 (see FIG. 3), is further rotated in the second direction. In this example, the power of the drive unit 50 is transmitted to the first holder 61 via the transmission member 51 so as to rotate the first holder 61 in the second direction or counterclockwise (CCW). When the first holder 61 holding the first optical element 201 is rotated about the optical axis L₁ in the second direction, the rotation mechanism 63 allows the first holder 61 to rotate without changing the rotation angle θ₁ of the first holder 61 with respect to the second holder 62 holding the second optical element 202. In other words, as illustrated in FIGs. 3 and 6, the rotation mechanism 63 allows the first optical element 201 to rotate relative to the second optical element 202 in the first direction and does not allow the first optical element 201 to rotate relative to the second optical element 202 in the second direction. Accordingly, the second holder 62 is rotated together with the first holder 61 in the rotation about the optical axis L₁ in the second direction.

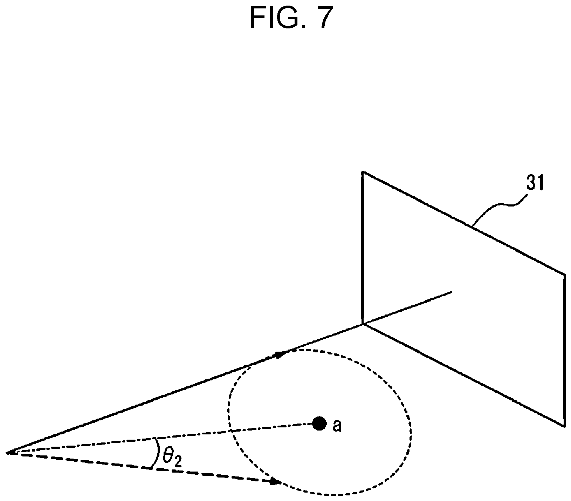

FIG. 7 is a view for explanation of the direction of the incident light with respect to the image sensor 31. In the imaging device 10 of the present embodiment, the adjustment mechanism includes the first optical element 201, the second optical element 202, and the rotation mechanism 63, and the adjustment mechanism is configured to adjust the direction of light incident on the light receiving surface of the image sensor 31. In FIG. 7, reference sign "a" denotes the original direction of light emitted from the second surface 202B of the second optical element 202. As described above, the angle of the emitted light can be shifted by the angle θ₂ by rotating the first holder 61 holding the first optical element 201 about the optical axis L₁ in the first direction. Subsequently, by rotating the first holder 61 holding the first optical element 201 about the optical axis L₁ in the second direction, the emitted light having the angle θ₂ (the light shifted by the angle θ₂ from the original direction) is rotated about "a" in FIG. 7. Thus, the adjustment mechanism first rotates the first optical element 201 in the first direction and subsequently rotate the first optical element 201 in the second direction. As a result, the direction of the light incident on the light receiving surface of the image sensor 31 can be adjusted as desired. For example, the adhesive that adheres the substrate 32 to the inner frame 30 may contract and move the position of the image sensor 31. Even in this case, the imaging device 10 equipped with the adjustment mechanism can adjust the direction of light such that the light is incident orthogonally on the light receiving surface of the image sensor 31.

The above adjustment mechanism has one drive unit 50 that can rotate both the first optical element 201 and the second optical element 202. In contract to the known art, the adjustment mechanism can adjust the direction of light so that light can be incident on the light receiving surface of the image sensor 31 in a desired direction while the adjustment mechanism does not translate the first optical element 201 and the second optical element 202 relative to each other and does not change the spacing therebetween. This enables size reduction of the imaging device 10.

As in the example above, the adjustment mechanism of the imaging device 10 can be used to adjust the direction of incident light in the case of the image sensor 31 being changed in position due to the contraction of the adhesive in the process of manufacturing the imaging device 10. The adjustment mechanism of the imaging device 10 can be used to adjust the direction of incident light also in the case of the image sensor 31 being changed in position due to expansion of the substrate 32 under high-temperature conditions when the imaging device 10 is installed, for example, in a vehicle. For example, in the case of the imaging device 10 being applied to a digital still camera, the adjustment mechanism of the imaging device 10 can be used for swing and tilt photographing in which the focal point is intentionally shifted on the light receiving surface of the image sensor 31.

The present disclosure has been described through embodiments with drawings. Note that a person skilled in the art can make various modifications and alterations easily on the bases of the present disclosure. Accordingly, such modifications and alterations fall within the scope of the present disclosure. For example, functions included in respective means may be relocated insofar as such relocation does not pose a contradiction, and multiple means can be combined or divided.

In the above embodiment, the first optical element 201 and the second optical element 202 are disposed such that the second surface 201B and the first surface 202A oppose each other. In other words, the first optical element 201 and the second optical element 202, both of which are prisms, have respective inclined surfaces that oppose each other. The orientations of the first optical element 201 and the second optical element 202 are not limited to this. Surfaces other than the inclined surfaces of the first optical element 201 and the second optical element 202 may oppose each other. For example, the first surface 201A of the first optical element 201 may oppose the second surface 202B of the second optical element 202.

In the present embodiment, the imaging optical system 20 includes the second lens 212, the first lens 211, the first optical element 201, and the second optical element 202, which are disposed in this order from the object side toward the image forming side. The disposition order of the optical members, however, is not limited to this. For example, the first optical element 201 may be disposed immediately behind the second lens 212.

The inclusion relationship of the first holder 61, the second holder 62, and the lens barrel 21 is not limited to the example described in the above embodiment. For example, the first holder 61 may accommodate at least part of the second holder 62. Moreover, the imaging device 10 need not include the lens barrel 21. In this case, the first holder 61 or the second holder 62 may hold lenses.

In the above embodiment, the first direction is the clockwise direction, and the second direction is the counterclockwise direction. The first direction and the second direction, however, may be defined in an opposite manner. In other words, the first direction may be the counterclockwise direction, and the second direction may be the clockwise direction.

In the above embodiment, the power of the drive unit 50 is transmitted to the first holder 61 via the transmission member 51. As an alternative embodiment, the power of the drive unit 50 may be transmitted to the second holder 62 via the transmission member 51. In this case, the rotation mechanism 63 allows the second optical element 202 to rotate relative to the first optical element 201 in the first direction and does not allow the second optical element 202 to rotate relative to the first optical element 201 in the second direction.

### REFERENCE SIGNS

- 10: imaging device
- 11: housing
- 20: imaging optical system
- 21: lens barrel
- 30: inner frame
- 31: image sensor
- 32: substrate
- 50: drive unit
- 51: transmission member
- 61: first holder
- 62: second holder
- 63: rotation mechanism
- 64: ball bearing
- 201: first optical element
- 202: second optical element
- 211: first lens
- 212: second lens
- 213: protective cover
- CW: clockwise
- CCW: counterclockwise
- L₁: optical axis
- L₂: rotation axis
- θ₁: rotation angle

## Claims

1. An adjustment mechanism, comprising:
a first optical element;
a second optical element having a same optical axis as that of the first optical element; and
a rotation mechanism, wherein
the rotation mechanism allows the first optical element to rotate while the rotation mechanism changes a rotation angle of the first optical element relative to the second optical element when the first optical element is rotated about the optical axis in a first direction, and
the rotation mechanism allows the first optical element to rotate while the rotation mechanism does not change the rotation angle of the first optical element relative to the second optical element when the first optical element is rotated about the optical axis in a second direction.

2. The adjustment mechanism according to claim 1, wherein
the rotation mechanism allows the first optical element to rotate relative to the second optical element in the first direction and does not allow the first optical element to rotate relative to the second optical element in the second direction.

3. The adjustment mechanism according to claim 1 or 2, further comprising:
a tubular first holder holding the first optical element; and
a tubular second holder holding the second optical element and accommodating at least part of the first holder, wherein
the rotation mechanism is disposed between the first holder and the second holder.

4. The adjustment mechanism according to claim 3, further comprising:
a lens barrel accommodating the second holder, wherein
the second holder is rotatable relative to the lens barrel about the optical axis of the second optical element.

5. The adjustment mechanism according to any one of claims 1 to 4, wherein
the first optical element and the second optical element are prisms each having two non-parallel surfaces and each being disposed such that the two non-parallel surfaces intersecting the optical axis.

6. The adjustment mechanism according to any one of claims 1 to 5, wherein
when the first optical element is rotated in the second direction, the rotation mechanism simultaneously rotates the second optical element in the second direction.

7. The adjustment mechanism according to any one of claims 1 to 6, wherein
the rotation mechanism comprises a one-way clutch.

8. An imaging device, comprising:
a first optical element;
a second optical element having a same optical axis as that of the first optical element;
a rotation mechanism,
the rotation mechanism allowing the first optical element to rotate while the rotation mechanism changes a rotation angle of the first optical element relative to the second optical element when the first optical element is rotated about the optical axis in a first direction,
the rotation mechanism allowing the first optical element to rotate while the rotation mechanism does not change the rotation angle of the first optical element relative to the second optical element when the first optical element is rotated about the optical axis in a second direction; and
an image sensor having a light receiving surface disposed at a position where light passing through the first optical element and the second optical element forms an image.
